# EUROPÄISCHE PATENTSCHRIFT

(11) **EP 3 571 094 B1**
(45) Veröffentlichungstag und Bekanntmachung des Hinweises auf die Patenterteilung: **24.02.2021**
(21) Anmeldenummer: 18700739.8
(22) Anmeldetag: 16.01.2018
(51) Int. Cl.: B60R 13/04, B62D 25/02, B62D 35/00

(54) **LÄNGSTRÄGER-VERKLEIDUNGSANORDNUNG EINES FAHRZEUGS**
LONGITUDINAL BEAM CLADDING ARRANGEMENT OF A VEHICLE
DISPOSITIF D'HABILLAGE DE LONGERON DE VÉHICULE

(30) Priorität: 18.01.2017 DE 102017000405
(43) Veröffentlichungstag der Anmeldung: 27.11.2019
(73) Patentinhaber: Daimler AG, 70372 Stuttgart (DE)
(72) Erfinder: HAHN, Samuel, 71034 Böblingen (DE)
(74) Vertreter: JENSEN & SON
(86) Internationale Anmeldenummer: PCT/EP2018/050912
(87) Internationale Veröffentlichungsnummer: WO 2018/134160

(56) Entgegenhaltungen:
- DE-A1- 3 613 301
- DE-A1-102004 045 382
- DE-U1-202011 005 504
- FR-A1- 2 729 114
- FR-A1- 2 983 451

## Beschreibung

Die Erfindung betrifft eine Verkleidungsanordnung eines Fahrzeuglängsträgers.

Aus der DE 10 2009 031 534 A1 geht eine Verkleidungsanordnung mit einer Verstellanordnung hervor, die ein Verkleidungselement aufweist. Das Verkleidungselement ist schwenkbar an zumindest einem weiteren Verkleidungselement gelagert. Eine solche Verkleidungsanordnung wird insbesondere verwendet, um stetig steigende Anforderungen an die Ergonomie und den Komfort von Fahrzeugen, insbesondere mit Blick auf die Bequemlichkeit beim Ein- und Aussteigen, mit Korrosionsschutzanforderungen für die Karosserie, insbesondere an Türen derselben, in Einklang zu bringen. Dabei zeigt sich insbesondere, dass Türunterkanten von Fahrzeugkarosserien durch eine Längsträgerverkleidung vor Steinschlägen und Schmutz geschützt werden kann, wobei die Längsträgerverkleidung hierzu über die Türunterkante in Fahrzeug-Breitenrichtung hinausragt oder bündig mit der Tür abschließt. Beim Ein- und Aussteigen ist diese Längsträgerverkleidung aber den Beinen eines Nutzers des Fahrzeugs im Weg, was insbesondere für ältere Menschen oder für Personen mit eingeschränkter Mobilität problematisch sein kann. Dieses Problem verschärft sich, wenn die Fahrzeugtür bei einem in einer Garage geparkten Fahrzeug nicht weit geöffnet werden kann. Es ist daher vorgesehen, dass das Verkleidungselement der Verkleidungsanordnung aus einer ausgestellten Schutzstellung, in welcher es die Fahrzeugtür oder ein anderes Karosserieelement vor Steinschlag, anderweitiger Beschädigung, Schmutz und insbesondere Korrosion schützt, indem es bündig mit dieser abschließt oder sie überlappt, in eine eingeklappte Komfortstellung verschwenkt werden kann, in welcher Raum für die Beine eines Nutzers des Fahrzeugs beim Ein- und Aussteigen freigegeben wird.

Aus der DE 10 2004 045 382 A1 geht eine gattungsgemäße Längsträger-Verkleidungsanordnung hervor, welche bezüglich ihres Bauraumbedarfs verbesserungsfähig ist.

Der Erfindung liegt die Aufgabe zugrunde, eine Verkleidungsanordnung zu schaffen, welche den genannten Nachteil nicht aufweist.

Die Aufgabe wird durch eine Längsträger-Verkleidungsanordnung mit den Merkmalen des Anspruchs 1 gelöst. Vorteilhafte Ausgestaltungen ergeben sich aus den Unteransprüchen.

Die zur Verkleidung eines Längsträgers eines Fahrzeugs dienende Längsträger-Verkleidungsanordnung weist eine Verstellanordnung auf, welche in eine erste Funktionsstellung und in eine zweite Funktionsstellung verlagerbar ist. Die Längsträger-Verkleidungsanordnung weist außerdem eine Verstelleinrichtung auf, die eingerichtet ist, um die Verstellanordnung von der ersten Funktionsstellung in die zweite Funktionsstellung und/oder von der zweiten Funktionsstellung in die erste Funktionsstellung zu verstellen. Vorzugsweise ist die Verstelleinrichtung eingerichtet, um die Verstellanordnung von der ersten Funktionsstellung in die zweite Funktionsstellung und zurück zu verstellen. Dabei ist vorgesehen, dass die Verstellanordnung ein erstes Verkleidungselement und ein zweites Verkleidungselement aufweist, wobei das erste Verkleidungselement und das zweite Verkleidungselement miteinander gekoppelt sind, sodass das erste Verkleidungselement und das zweite Verkleidungselement gemeinsam durch die Verstelleinrichtung verlagerbar sind. Auf diese Weise kann eine von ihrer Kinematik her verbesserte Längsträger-Verkleidungsanordnung bereitgestellt werden, die insbesondere flexibler auch einen relativ großen Raum für die Beine eines Nutzers eines Fahrzeugs, welches die Verkleidungsanordnung aufweist, freigeben kann, wobei die beiden Verkleidungselemente selbst insbesondere für Ihre Verlagerung von der ersten Funktionsstellung in die zweite Funktionsstellung und zurück nur vergleichsweise wenig Raum benötigen, da sie insoweit günstig zueinander angeordnet werden können und eine platzsparende Relativbewegung relativ zueinander ausführen können. Aufgrund der Kopplung der beiden Verkleidungselemente miteinander bedarf es nur einer einzigen Verstelleinrichtung zu deren Verlagerung, wobei bevorzugt eines der beiden Verkleidungselemente durch das andere der beiden Verkleidungselemente mitgenommen wird. Besonders bevorzugt wird das zweite Verkleidungselement durch das erste Verkleidungselement im Laufe von dessen Verlagerung mitgenommen. Die Längsträger-Verkleidungsanordnung weist also bevorzugt nur eine Verstelleinrichtung auf, wobei das erste Verkleidungselement und das zweite Verkleidungselement gemeinsam durch die einzige Verstelleinrichtung verlagerbar sind. Insbesondere weist die eine Verstelleinrichtung bevorzugt genau einen Aktor oder Motor auf, der mit einem der Verkleidungselemente, bevorzugt mit dem ersten Verkleidungselement, wirkverbunden ist.

Die Längsträger-Verkleidungsanordnung zeichnet sich dadurch aus, dass das zweite Verkleidungselement in der zweiten Funktionsstellung auf dem ersten Verkleidungselement aufliegt, wobei das zweite Verkleidungselement ein Dämpfungselement aufweist, das in der zweiten Funktionsstellung mit dem ersten Verkleidungselement in berührendem Kontakt ist. Durch das Dämpfungselement wird wirksam verhindert, dass eine dem zweiten Verkleidungselement in der zweiten Funktionsstellung zugewandte Oberfläche des ersten Verkleidungselements durch das aufliegende zweite Verkleidungselement beschädigt wird.

Das erste Verkleidungselement und das zweite Verkleidungselement sind vorzugsweise formstabil/formsteif ausgebildet. Im Zusammenhang mit dieser Erfindung wird unter den Begriffen "formstabil/formsteif" verstanden, dass das Verkleidungselement eine materialbedingte und/oder konstruktionsbedingte Eigensteifigkeit aufweist, die so groß ist, dass es insbesondere beim Verschwenken seine Ausgangsform beibehält, sofern zumindest keine äußeren Kräfte - außer natürlich die zur Verlagerung des jeweiligen Verkleidungselements erforderlichen Kräfte - auf das erste Verkleidungselement oder das zweite Verkleidungselement einwirken. Damit verhält sich das formstabile Verkleidungselement beziehungsweise die formstabilen Verkleidungselemente völlig anders als ein aus einer flexiblen Materialbahn hergestelltes Verkleidungselement, wie es aus dem Stand der Technik bekannt ist.

Die erste Funktionsstellung ist vorzugsweise eine Schutzstellung, in welcher die Verkleidungselemente in einer ausgestellten Position angeordnet sind, sodass sie ein Karosserieelement, beispielsweise eine Tür, überragen oder mit diesem Karosserieelement bündig abschließen können. Dadurch kann das Karosserieelement in der ausgestellten Schutzstellung sicher vor Steinschlag, Schmutz und letztlich Korrosion geschützt werden. Die zweite Funktionsstellung ist vorzugsweise eine eingeklappte Komfortstellung, in welcher die Verkleidungselemente derart eingeschwenkt sind, dass sie Bauraum für Beine eines Nutzers des Fahrzeugs beim Ein- und Aussteigen freigeben. Es ist möglich, dass die Verkleidungselemente aktiv durch einen Nutzer des Fahrzeugs von der ersten Funktionsstellung in die zweite Funktionsstellung - und bevorzugt zurück - geschwenkt werden können, beispielsweise durch direkte mechanische Einwirkung auf die Verstelleinrichtung, durch Betätigen eines Druckknopfes oder Tasters, durch Auswahl eines Menüpunkts in einem elektronischen Bedienmenü, oder in anderer geeigneter Weise. Es ist aber auch möglich, dass die Verkleidungselemente automatisch von der ersten in die zweite Funktionsstellung - und vorzugsweise zurück - verlagerbar sind, beispielsweise dann, wenn ein Ein- und/oder Aussteigewunsch des Nutzers erkannt wird. Dies kann beispielsweise - im Fall des Einsteigens - am Hintergreifen eines Türgriffs, am Öffnen der Tür, an einer Annäherung an die Tür, oder in anderer geeigneter Weise erkannt werden; im Fall des Aussteigens kann dies beispielsweise an einem Abstellen eines Antriebsaggregats des Fahrzeugs, am Hintergreifen eines inneren Türgriffs, am Öffnen der Tür, oder in anderer geeigneter Weise erkannt werden. Es ist insbesondere möglich, dass die Verstelleinrichtung zur Verlagerung der Verkleidungselemente dann angesteuert wird, wenn auch ein Lenkrad zur Verlagerung in eine Ausstiegsposition, beispielsweise zur Verlagerung nach oben in Fahrzeug-Hochrichtung, angesteuert wird.

Das erste Verkleidungselement und das zweite Verkleidungselement sind bevorzugt relativ zueinander verschwenkbar gelagert. Dies stellt eine besonders einfache und zugleich platzsparende Ausgestaltung der Längsträger-Verkleidungsanordnung dar. Aufgrund der schwenkbaren Lagerung der Verkleidungselemente und deren formsteifen/- stabilen Eigenschaften wird klar, dass die Verkleidungselemente ähnlich oder analog einer Klappe oder Klappenelements ausgebildet sind beziehungsweise wirken.

Vorzugsweise ist an dem ersten Verkleidungselement ein Mitnehmer angeordnet, welcher in eine zu dem Mitnehmer korrespondierende Führung, die an dem zweiten Verkleidungselement angeordnet ist, eingreift. Durch den Eingriff des Mitnehmers des ersten Verkleidungselements in die Führung des zweiten Verkleidungselements ist eine Kopplung zwischen den Verkleidungselementen verwirklicht, sodass das zweite Verkleidungselement bei einer Verlagerung des ersten Verkleidungselements von diesem mitnehmbar ist.

Gemäß einer Weiterbildung der Erfindung ist vorgesehen, dass das erste Verkleidungselement um eine erste Schwenkachse schwenkbar gelagert ist. Das zweite Verkleidungselement ist vorzugsweise um eine zweite Schwenkachse schwenkbar gelagert, wobei die zweite Schwenkachse zu der ersten Schwenkachse parallelversetzt angeordnet ist. Diese Ausgestaltung ermöglicht eine besonders platzsparende Verlagerung der Verkleidungselemente aus der ersten Funktionsstellung in die zweite Funktionsstellung und zurück. Bei der ersten Schwenkachse handelt es sich bevorzugt um eine - bei bestimmungsgemäßer Anordnung der Längsträger-Verkleidungsanordnung an einem Fahrzeug oder an einer Fahrzeugkarosserie in Hochrichtung gesehen - obere, in Längsrichtung der Längsträger-Verkleidungsanordnung und damit vorzugsweise zugleich auch des Fahrzeugs weisende Schwenkachse. Bei der zweiten Schwenkachse handelt es sich bevorzugt um eine untere Schwenkachse, die ebenfalls in Längsrichtung der Längsträger-Verkleidungsanordnung und bevorzugt in Fahrzeug-Längsrichtung weist, wobei sie parallel zu der ersten, oberen Schwenkachse orientiert ist. Die Schwenkachsen sind bevorzugt in Querrichtung, insbesondere in Querrichtung der Längsträger-Verkleidungsanordnung und vorzugsweise auch in Querrichtung einer Fahrzeugkarosserie, an welcher die Längsträger-Verkleidungsanordnung angeordnet ist, zueinander versetzt. Dabei ist das erste Verkleidungselement bevorzugt an einem oberen, inneren, das heißt insbesondere einer Mittellängsachse des Fahrzeugs zugewandten, Bereich der Längsträger-Verkleidungsanordnung angeordnet, wobei die zweite Schwenkachse an einem unteren, äußeren, das heißt einer Umgebung des Fahrzeugs zugewandten, Bereich der Längsträger-Verkleidungsanordnung angeordnet ist.

Die Begriffe "oben" und "unten" sprechen hier stets Richtungen an, die sich auf eine bestimmungsgemäße Einbaulage der Längsträger-Verkleidungsanordnung an einer Fahrzeugkarosserie beziehen. "Oben" bedeutet dabei insbesondere "in Richtung eines Fahrzeugdaches gesehen", wobei "unten" insbesondere "in Richtung einer Aufstandsftäche, auf welcher das Fahrzeug aufsteht, gesehen" bedeutet. Die Längsrichtung der Längsträger-Verkleidungsanordnung ist bevorzugt zugleich eine Längsrichtung der Karosserie oder des Fahrzeugs. Die schwenkbare Verlagerbarkeit des ersten Verkleidungselements kann beispielsweise durch einen Schwenkzapfen bewirkt sein, aber auch ein Filmscharnier oder andere geeignete Möglichkeiten der schwenkbaren Lagerung des ersten Verkleidungselements sind denkbar.

Das erste Verkleidungselement ist insbesondere um die erste Schwenkachse von der ersten Funktionsstellung in die zweite Funktionsstellung und zurück schwenkbar. Entsprechend ist das zweite Verkleidungselement bevorzugt um die zweite Schwenkachse von der ersten Funktionsstellung in die zweite Funktionsstellung und zurück schwenkbar.

Gemäß einer bevorzugten Ausgestaltung der Erfindung ist vorgesehen, dass der Mitnehmer des ersten Verkleidungselements als stabförmiger Vorsprung, Nippel oder lippenartiger Fortsatz ausgebildet ist. Alternativ oder zusätzlich ist bevorzugt vorgesehen, dass die Führung des zweiten Verkleidungselements als Langloch ausgebildet ist, in welches der Mitnehmer eingreift. Das Langloch ist vorzugsweise in einer Führungsleiste ausgebildet, die an dem zweiten Verkleidungselement angeordnet ist.

Der Mitnehmer des ersten Verkleidungselements ist bevorzugt in der ersten Funktionsstellung von einer nach innen umgebogenen Biegekante des zweiten Verkleidungselements abgedeckt, wobei sich die Biegekante vorzugsweise an einem oberen Ende des zweiten Verkleidungselements befindet.

Das erste Verkleidungselement ist vorzugsweise in der ersten Funktionsstellung - in bestimmungsgemäßer Einbaulage - horizontal ausgerichtet und bildet eine Abschlusswandung für die Längsträger-Verkleidungsanordnung nach oben. Das zweite Verkleidungselement ist in der ersten Funktionsstellung bevorzugt in einem Winkel zu dem ersten Verkleidungselement angeordnet, der vorzugsweise zwischen 80° und 90° betragen kann. Insbesondere ist es möglich, dass das zweite Verkleidungselement im Wesentlichen vertikal angeordnet ist, wobei es bevorzugt eine seitliche Abschlusswandung der Längsträger-Verkleidungsanordnung bildet. Die an dem oberen Ende des zweiten Verkleidungselements angeordnete Biegekante überdeckt bevorzugt in der ersten Funktionsstellung das erste Verkleidungselement bereichsweise, wobei es insbesondere den Mitnehmer überdeckt. Es ist möglich, dass das erste Verkleidungselement und/oder das zweite Verkleidungselement wenigstens ein Dichtelement aufweist/aufweisen, das so angeordnet und ausgebildet ist, dass die Biegekante dichtend auf dem ersten Verkleidungselement aufliegen kann. Auf diese Weise kann verhindert werden, dass Wasser und/oder Schmutz in der ersten Funktionsstellung in ein Inneres der Längsträger-Verkleidungsanordnung eindringen können.

Die Führung an dem zweiten Verkleidungselement, insbesondere das Langloch, ist bevorzugt so ausgebildet und angeordnet, dass bei einer Verlagerung der Verkleidungselemente von der ersten Funktionsstellung in die zweite Funktionsstellung zunächst nur das erste Verkleidungselement bewegt wird, während das zweite Verkleidungselement zunächst stillsteht und erst nach einem definierten Schwenkweg des ersten Verkleidungselements von diesem mitbewegt wird.

Die Verkleidungselemente sind bevorzugt in wenigstens einer Funktionsstellung, die ausgewählt ist aus der ersten Funktionsstellung und der zweiten Funktionsstellung, und die auch als Sperrstellung bezeichnet wird, durch die Verstelleinrichtung arretiert. Besonders bevorzugt sind beide Funktionsstellungen, das heißt die erste Funktionsstellung und die zweite Funktionsstellung, als Sperrstellungen ausgebildet, sodass die Verkleidungselemente in beiden Funktionsstellungen durch die Verstelleinrichtung arretiert sind.

Dass die Verkleidungselemente in der Sperrstellung durch die Verstelleinrichtung arretiert sind, bedeutet insbesondere, dass sie gegen eine Verlagerung aus der Sperrstellung heraus und insbesondere in die jeweils andere der wenigstens zwei Funktionsstellungen gesichert sind. Insbesondere ist es möglich, dass die Verkleidungselemente durch die Verstelleinrichtung in der Sperrstellung verriegelt werden. Jedenfalls sind die Verkleidungselemente in der Sperrstellung aufgrund der Arretierung durch die Verstelleinrichtung nicht ungewollt - das heißt insbesondere nicht ohne aktive Verlagerung durch die Verstelleinrichtung - lösbar. Vorzugsweise sind die Verkleidungselemente nur durch Überwindung einer der Verlagerung entgegenwirkenden Kraft aus der Sperrstellung hinaus in die jeweils andere Funktionsstellung verlagerbar.

Es ist auch möglich, dass die Verkleidungselemente durch die Verstelleinrichtung in der Sperrstellung mit einer Kraft beaufschlagt sind, welche die Verkleidungselemente in die Sperrstellung drängt.

Besonders bevorzugt ist vorgesehen, dass die Verstelleinrichtung eingerichtet ist, um die Verkleidungselemente in beiden Funktionsstellungen, das heißt der ersten Funktionsstellung und der zweiten Funktionsstellung, zu arretieren. Demnach handelt es sich in diesem Fall bei beiden Funktionsstellungen um Sperrstellungen,

Die Verstelleinrichtung weist vorzugsweise einen Aktor oder Motor auf, der bevorzugt mit dem ersten Verkleidungselement zu dessen Verschwenkung wirkverbunden ist. Vorzugsweise ist dem Aktor oder Motor ein Getriebe zugeordnet, über welches der Aktor oder Motor mit dem ersten Verkleidungselement wirkverbunden ist. Bei dem Getriebe handelt sich bevorzugt um ein selbsthemmendes Getriebe. Die selbsthemmende Eigenschaft des Getriebes führt - zusätzlich oder alternativ zu der im Folgenden noch beschriebenen Funktionsweise der Verstelleinrichtung - zu einer Arretierung der Verkleidungselemente in der Sperrstellung, da die Selbsthemmung einer Verlagerung derselben effektiv und effizient entgegenwirkt.

Gemäß einer Weiterbildung der Erfindung ist vorgesehen, dass die Verstelleinrichtung in der wenigstens einen Sperrstellung in einer Übertotpunktlage angeordnet ist. Alternativ oder zusätzlich ist es möglich, dass das erste Verkleidungselement in Kombination mit der Verstelleinrichtung in der wenigstens eine Sperrstellung in einer Übertotpunktlage angeordnet ist. Eine Übertotpunktlage für die Verstelleinrichtung und/oder das erste Verkleidungselement in Kombination mit derselben stellt eine ebenso einfache und einfach zu realisierende und wirksame Möglichkeit dar, das erste Verkleidungselement in der Sperrstellung zu arretieren. Da es für ein Verschwenken aus der Sperrstellung heraus in die jeweils andere Funktionsstellung des Überwindens eines Totpunkts bedarf, muss die Verstelleinrichtung aktiv gegen eine der Verlagerung in die Totpunktlage entgegenwirkende Kraft wirken, um das erste Verkleidungselement aus der Sperrstellung heraus zu verschwenken. Umgekehrt wird durch die Übertotpunktlage sichergestellt, dass eine nicht von der Verstelleinrichtung eingeleitete, sondern vielmehr an dem ersten Verkleidungselement angreifende Kraft, die dieses entgegen der Sperrstellung in die jeweils andere Funktionsstellung zu drängen versucht, nicht zu einer entsprechenden Verschwenkung führen kann, da diese Kraft - wie dies bei einer Übertotpunktlage stets der Fall ist - in eine von dem Totpunkt weg gerichtete Richtung und gerade nicht in Richtung des Totpunkts wirkt, wobei eine solche Kraft vorzugsweise in der Übertotpunktlage durch einen Anschlag abgestützt wird.

Gemäß einer Weiterbildung der Erfindung ist vorgesehen, dass die Längsträger-Verkleidungsanordnung wenigstens ein Anschlagelement aufweist. Das Anschlagelement ist so angeordnet, dass die Verstelleinrichtung in der wenigstens einen Sperrstellung mit dem wenigstens einen Anschlagelement an einem Anschlag anliegt, wobei sie vorzugsweise durch eine in Richtung entgegen der Sperrstellung auf das erste Verkleidungselement wirkende Kraft gegen den Anschlag oder das Anschlagelement gedrängt wird. Eine solche Kraft, die an dem ersten Verkleidungselement angreift und versucht, dieses aus der Sperrstellung heraus in die jeweils andere Funktionsstellung zu drängen, wird dann durch das Anschlagelement und gegebenenfalls den Anschlag abgestützt, wobei die Verstelleinrichtung, da sie mit dem Anschlagelement an dem Anschlag anliegt, nicht in die durch die entsprechende Kraft vorgegebene Verlagerungsrichtung gedrängt werden kann. Das Anschlagelement ist bevorzugt kombiniert vorgesehen mit einer Übertotpunktlage in der Sperrstellung, wobei es zu einer Überwindung des Totpunkts insbesondere einer Verlagerung der Verstelleinrichtung von dem Anschlag weg bedarf. Der Anschlag ist bevorzugt an einem relativ zu dem ersten Verkleidungselement und dem zweiten Verkleidungselement feststehenden Verkleidungselement angeordnet, vorzugsweise an einem Boden der Längsträger-Verkleidungsanordnung.

Vorzugsweise weist die Verstelleinrichtung selbst das wenigstens eine Anschlagelement auf. Es ist besonders bevorzugt vorgesehen, dass beide Funktionsstellungen des ersten Verkleidungselements als Sperrstellungen ausgebildet sind, wobei für jede Funktionsstellung ein Anschlagelement vorgesehen ist.

Besonders bevorzugt weist die Verstelleinrichtung eine durch den Aktor oder Motor - vorzugsweise vermittelt über das selbsthemmende Getriebe - angetriebene Exzenterscheibe auf, an der außermittig, also exzentrisch, ein Lenkerhebel mit einem ersten Ende schwenkbeweglich angelenkt ist, wobei der Lenkerhebel mit einem - in Längsrichtung des Lenkerhebels gesehen - gegenüberliegenden, zweiten Ende schwenkbeweglich an dem ersten Verkleidungselement angelenkt ist. Dabei greift der Lenkerhebel vorzugsweise mit seinem zweiten Ende an einem unterseitigen Vorsprung des ersten Verkleidungselements an. Der Anlenkpunkt des Lenkerhebels an dem ersten Verkleidungselement ist vorzugsweise relativ zu einer Schwenkachse, um welche das erste Verkleidungselement schwenkbar gelagert ist, versetzt. Auf diese Weise kann das erste Verkleidungselement durch den Lenkerhebel verschwenkt werden, wenn die Exzenterscheibe durch den Aktor oder Motor gedreht wird.

Die Übertotpunktlage in der Sperrstellung resultiert bevorzugt daraus, dass der Anlenkpunkt des Lenkerhebels an dem ersten Verkleidungselement, ein Anlenkpunkt des Lenkerhebels an der Exzenterscheibe, und ein Mittelpunkt der Exzenterscheibe, durch den die Drehachse der Exzenterscheibe verläuft, in der Sperrstellung nicht kollinear zueinander angeordnet sind, wobei vielmehr der Anlenkpunkt des Lenkerhebels an der Exzenterscheibe - ausgehend von der anderen Funktionsstellung gesehen - in der Sperrstellung über die kollineare Totpunktlage hinaus weiter verlagert ist, sodass er für eine Verlagerung in die andere Funktionsstellung durch die Totpunktlage hindurch verlagert werden müsste. Dies kann aber nur durch aktives Verschwenken der Exzenterscheibe durch den Aktor oder Motor - gegen eine der Verlagerung in die Totpunktlage entgegenwirkende Kraft - bewirkt werden, während an dem ersten Verkleidungselement angreifende Kräfte über den Lenkerhebel derart in die Exzenterscheibe eingeleitet werden, dass diese in die der anderen Funktionsstellung entgegengerichtete Drehrichtung gedrängt wird, wobei diese Kräfte vorzugsweise durch das Anschlagelement an dem Anschlag abgestützt werden, wodurch eine weitere Verdrehung der Exzenterscheibe über die Sperrstellung hinaus verhindert wird.

Das Anschlagelement ist vorzugsweise an der Exzenterscheibe angeordnet. Vorzugsweise sind die den beiden Funktionsstellungen jeweils zugeordneten Anschlagelemente an der Exzenterscheibe angeordnet. Besonders bevorzugt ist wenigstens eines der Anschlagelemente - vorzugsweise sind dies beide - als radialer Vorsprung oder als radiale Stufe der an einem äußeren Umfang der Exzenterscheibe ausgebildet.

Gemäß einer Weiterbildung der Erfindung ist vorgesehen, dass das zweite Verkleidungselement bündig mit einem dritten, relativ zu dem ersten Verkleidungselement und dem zweiten Verkleidungselement feststehenden Verkleidungselement im Bereich der zweiten Schwenkachse abschließt. Besonders bevorzugt geht das zweite Verkleidungselement in das dritte Verkleidungselement über, wobei die Schwenkbarkeit des zweiten Verkleidungselements relativ zu dem dritten Verkleidungselement sowie die zweite Schwenkachse bevorzugt durch eine Schwächung oder Ausdünnung des Materials im Bereich des Übergangs zwischen dem zweiten Verkleidungselement und dem dritten Verkleidungselement bereitgestellt werden. Es ist dabei möglich, dass das zweite Verkleidungselement mit dem dritten Verkleidungselement einstückig und/oder materialeinheitlich ausgebildet ist. Bevorzugt ist das zweite Verkleidungselement mit dem dritten Verkleidungselement über ein Filmscharnier gelenkig verbunden. Das dritte Verkleidungselement bildet vorzugsweise einen Boden der Längsträger-Verkleidungsanordnung, der bevorzugt den Anschlag für das Anschlagelement trägt. Das zweite Verkleidungselement ist bei bestimmungsgemäßer Orientierung der Längsträger-Verkleidungsanordnung unten außen an dem dritten Verkleidungselement angelenkt.

Gemäß einer Weiterbildung der Erfindung ist vorgesehen, dass das erste Verkleidungselement und das zweite Verkleidungselement in der zweiten Funktionsstellung aufeinandergeklappt oder übereinandergeklappt sind. Auf diese Weise können die beiden Verkleidungselemente bei jeweils relativ kleinem, bauraumsparendem Schwenkweg vergleichsweise viel Bauraum in der zweiten Funktionsstellung freigeben. Während der Verlagerung von der ersten Funktionsstellung in die zweite Funktionsstellung klappt bevorzugt zunächst das erste Verkleidungselement ein, wobei dann das zweite Verkleidungselement mitgenommen und auf das erste Verkleidungselement aufgelegt wird.

Gemäß einer Weiterbildung der Erfindung ist vorgesehen, dass das erste Verkleidungselement in der zweiten Funktionsstellung mit einer Innenfläche, das heißt einer Fläche, die einem Inneren der Längsträger-Verkleidungsanordnung zugewandt ist, an einem Stützanschlag anliegt, der an einem unteren, dem ersten Verkleidungselement in Hochrichtung gesehen gegenüberliegenden Verkleidungselement angeordnet ist. Bei diesem unteren Verkleidungselement handelte sich bevorzugt um das bereits zuvor beschriebene dritte Verkleidungselement. Der Stützanschlag kann insbesondere als domartiger Ständer ausgebildet sein. Insbesondere begrenzt der Stützanschlag eine Einklappbewegung des ersten Verkleidungselements und damit zugleich auch des zweiten Verkleidungselements nach innen. Vorzugsweise ist der Stützanschlag separat von dem Anschlag für das wenigstens eine Anschlagelement vorgesehen, wobei der Anschlag ebenfalls an einem insbesondere domartigen Ständer des unteren Verkleidungselements, insbesondere des dritten Verkleidungselements, angeordnet sein kann. Dabei ist dieser zweite Ständer, der den Anschlag aufweist, bevorzugt - in Hochrichtung gesehen - kleiner als der erste Ständer, welcher den Stützanschlag aufweist.

Gemäß einer Weiterbildung der Erfindung ist vorgesehen, dass das zweite Verkleidungselement in der zweiten Funktionsstellung auf dem ersten Verkleidungselement aufliegt. Besonders bevorzugt liegt es mit seiner nach innen gerichteten Biegekante auf dem ersten Verkleidungselement auf. Auf diese Weise können die beiden Verkleidungselemente besonders bauraumsparend und effizient ineinander- oder aufeinandergeklappt werden.

Bei einem vorteilhaften Ausführungsform der Längsträger-Verkleidungsanordnung ist das vorzugsweise elastische und/oder ein Elastomer aufweisende Dämpfungselement an der Biegekante des zweiten Verkleidungselements vorgesehen. Bei dem Dämpfungselement kann es sich dabei um das bereits zuvor beschriebene Dichtelement handeln, welches in der ersten Funktionsstellung für eine Dichtung des Inneren der Längsträger-Verkleidungsanordnung vorgesehen ist. Es ist aber auch möglich, dass das Dämpfungselement nur für die Anlage des zweiten Verkleidungselements an dem ersten Verkleidungselement in der zweiten Funktionsstellung vorgesehen ist.

Gemäß einer Weiterbildung der Erfindung ist vorgesehen, dass das erste Verkleidungselement an einem vierten, relativ zu dem ersten Verkleidungselement und dem zweiten Verkleidungselement feststehenden Verkleidungselement schwenkbar angelenkt ist. Vorzugsweise ist das erste Verkleidungselement mittels eines Schwenkzapfens an dem vierten Verkleidungselement schwenkbar angelenkt. Es ist möglich, dass das vierte Verkleidungselement einstückig und/oder materialeinheitlich mit dem dritten Verkleidungselement ausgebildet ist, wobei diese Verkleidungselemente dann gemeinsam einen starren Verkleidungsrahmen der Längsträger-Verkleidungsanordnung bilden, an welchem das erste Verkleidungselement und das zweite Verkleidungselement schwenkbar angelenkt sind. Dabei ist das erste Verkleidungselement bevorzugt an einem Deckenbereich des starren Verkleidungsrahmens schwenkbar gelagert, wobei das zweite Verkleidungselement an einem Bodenbereich des starren Verkleidungsrahmens schwenkbar gelagert ist.

Gemäß einer Weiterbildung der Erfindung ist vorgesehen, dass das erste Verkleidungselement und das zweite Verkleidungselement in der ersten Funktionsstellung bündig mit einem - in Längsrichtung gesehen - dem ersten Verkleidungselement und dem zweiten Verkleidungselement benachbarten, feststehenden Bereich der Längsträger-Verkleidungsanordnung angeordnet sind. Insbesondere schließen die beiden verschwenkbaren Verkleidungselemente bevorzugt in der unverschwenkten Stellung, mithin der ersten Funktionsstellung, bündig mit der Kontur der starren, also relativ zu den verschwenkbaren Verkleidungselementen feststehenden, Verkleidungselemente und somit bevorzugt mit dem starren Verkleidungsrahmen ab. Die Längsträger-Verkleidungsanordnung weist dann in der ersten Funktionsstellung eine geschlossene Geometrie auf.

Schließlich ist gemäß einer Weiterbildung der Erfindung bevorzugt vorgesehen, dass die Verkleidungsanordnung als Längsträgerverkleidung für ein Kraftfahrzeug, insbesondere für einen Personenkraftwagen, ausgebildet ist. Dabei verwirklichen sich in besonderer Weise die bereits beschriebenen Vorteile der Verkleidungsanordnung.

Die schwenkbaren Verkleidungselemente, also das erste Verkleidungselement und das zweite Verkleidungselement, sind bevorzugt in einem Türbereich einer KraftfahrzeugKarosserie vorgesehen, sodass sie in der ersten Funktionsstellung die Tür, insbesondere eine Unterkante der Tür, vor Steinschlag, Schmutz und letztlich Korrosion schützen können, wobei sie in der zweiten Funktionsstellung Raum für die Beine eines Nutzers des Fahrzeugs bereitstellen und dessen Bequemlichkeit beim Ein- und Aussteigen steigern können. Außerhalb dieses Türbereichs ist die als Längsträgerverkleidung ausgebildete Verkleidungsanordnung bevorzugt starr, das heißt insbesondere relativ zu den schwenkbaren Verkleidungselementen feststehend, ausgebildet.

Bevorzugt ist vorgesehen, dass die Verstelleinrichtung in einem Bereich der Längsträger-Verkleidungsanordnung angeordnet ist, der bei bestimmungsgemäßer Montage an einer Fahrzeugkarosserie nicht in Überdeckung mit einem zu verkleidenden Längsträger kommt, wobei sie bevorzugt vielmehr an einer Säule, vorzugsweise im Bereich der A-Säule oder der B-Säule, welche auch als Mittelsäule bezeichnet wird, der Karosserie, angeordnet ist. Dadurch ist es möglich, die Verstelleinrichtung in die Säule, insbesondere die A- oder B-Säule, zu integrieren, wo in besonders günstiger Weise Bauraum zur Unterbringung der Verstelleinrichtung zur Verfügung steht.

Die Längsträger-Verkleidungsanordnung ist bevorzugt insgesamt als - im Querschnitt gesehen - C-förmiges Hohlprofil ausgebildet. Auf diese Weise ist sie besonders geeignet zur Verkleidung des Längsträgers, insbesondere Tür- oder Seitenschweller einer Fahrzeugkarosserie und kann in einfacher Weise montiert werden.

Der Gegenstand der Erfindung betrifft auch ein Kraftfahrzeug nach Anspruch 9.

Die Erfindung wird im Folgenden anhand der Zeichnung näher erläutert. Dabei zeigen:
- Fig. 1: eine erste Ansicht eines Ausführungsbeispiels einer Längsträger-Verkleidungsanordnung in der ersten Funktionsstellung;
- Fig. 2: eine zweite Ansicht der Längsträger-Verkleidungsanordnung gemäß Figur 1 in der ersten Funktionsstellung;
- Fig. 3: eine dritte Ansicht der Längsträger-Verkleidungsanordnung gemäß den Figuren 1 und 2 in der ersten Funktionsstellung und
- Fig. 4: eine Darstellung des Ausführungsbeispiels der Längsträger-Verkleidungsanordnung gemäß den Figuren 1 bis 3 in der zweiten Funktionsstellung.

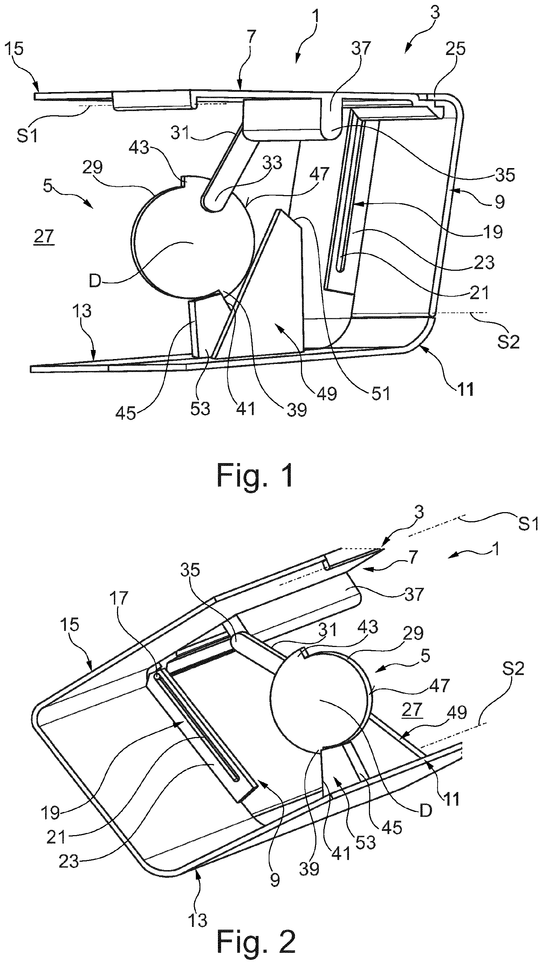

Figur 1 zeigt eine erste Ansicht eines Ausführungsbeispiels einer Verkleidungsanordnung 1. Die Verkleidungsanordnung 1 ist eingerichtet zur Verkleidung eines Längsträgers eines Fahrzeugs. Insbesondere ist sie als Längsträgerverkleidung für ein Kraftfahrzeug, insbesondere für einen Personenkraftwagen, ausgebildet. Bei dem Längsträger handelt es sich also insbesondere um einen in den Figuren nicht dargestellten, jedoch bekannten Seitenschweller, welcher Teil der Karosserietragstruktur/des Karosserierohbaus des Fahrzeugs ist und im Bereich einer seitlichen Türausschnittsöffnung der Karosserie angeordnet ist. Der einen Teil der tragenden Struktur des Fahrzeugs bildende Seitenschweller begrenzt die Türausschnittsöffnung nach unten hin. Der die tragende Struktur bildende Teil des Seitenschwellers ist üblicherweise ein mindestens einen Hohlraum umfassendes Profilteil, welches aus Schalenelementen zusammengesetzt oder als Strangpressprofilteil ausgebildet ist. Diese tragende Struktur des Seitenschwellers wird mittels der Längsträger-Verkleidungsanordnung 1 nach außen hin abgedeckt.

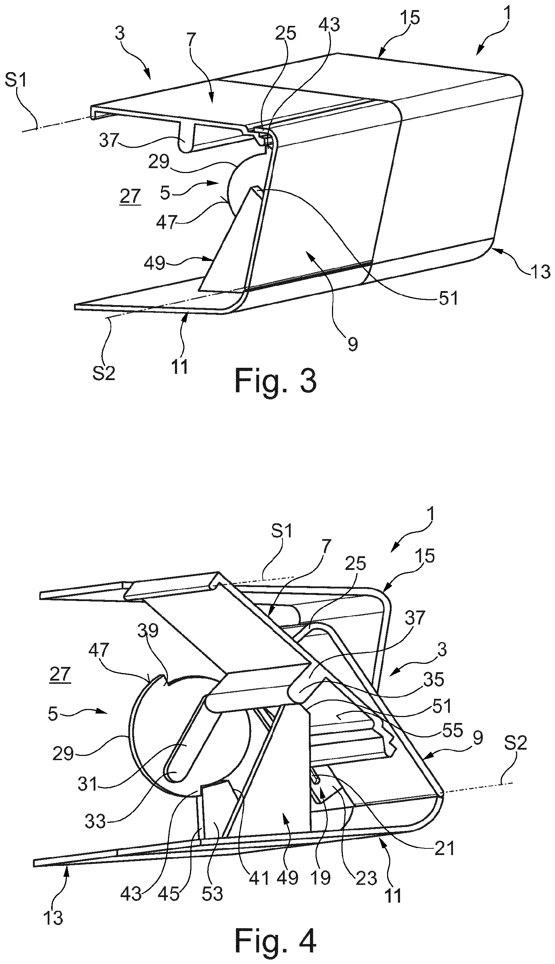

Die Längsträger-Verkleidungsanordnung 1 weist eine Verstellanordnung 3 auf, die in eine in Figur 1 dargestellte erste Funktionsstellung und in eine in Figur 4 dargestellte zweite Funktionsstellung verlagerbar ist. Es ist eine Verstelleinrichtung 5 vorgesehen, die eingerichtet ist, um die Verstellanordnung 3 von der ersten Funktionsstellung in die zweite Funktionsstellung und zurück zu verstellen. Die Verstellanordnung 3 weist ein erstes Verkleidungselement 7 und ein zweites Verkleidungselement 9 auf, wobei das erste Verkleidungselement 7 und das zweite Verkleidungselement 9 miteinander gekoppelt sind, sodass das erste Verkleidungselement 7 und das zweite Verkleidungselemente 9 gemeinsam durch die Verstelleinrichtung 5 verlagerbar sind. Auf diese Weise bedarf es nur einer einzigen Verstelleinrichtung 5 zur Verstellung der beiden Verkleidungselemente 7, 9, wobei diese in bauraumsparender Weise relativ zueinander verschwenkt werden können, um in der zweiten Funktionsstellung einen Komfortbereich für Beine eines Nutzers des Kraftfahrzeugs beim Ein- und Aussteigen freizugeben. In der ersten Funktionsstellung können die Verkleidungselemente 7, 9 effizient ein anderes Karosserieelement, insbesondere eine Fahrzeugtür, vor Steinschlag, Schmutz und letztlich Korrosion schützen.

Das erste Verkleidungselement 7 ist um eine erste Schwenkachse S1 schwenkbar gelagert, wobei das zweite Verkleidungselement 9 um eine zweite Schwenkachse S2 schwenkbar gelagert ist. Die Schwenkachsen S1, S2 sind parallelversetzt zueinander angeordnet. Dabei zeigt sich, dass diese sich hier in Längsrichtung der Längsträger-Verkleidungsanordnung 1 und zugleich bevorzugt auch in Längsrichtung (x-Richtung) eines Fahrzeugs oder einer Fahrzeugkarosserie, welches/welche die Längsträger-Verkleidungsanordnung 1 aufweist, erstrecken. Dabei ist die erste Schwenkachse S1 an der Längsträger-Verkleidungsanordnung 1 oben innen angeordnet, wobei die zweite Schwenkachse S2 unten außen angeordnet ist. Dabei bezieht sich der Begriff "innen" auf eine einer Fahrzeugmittellängsachse zugewandte Richtung, wobei sich der Begriff "außen" auf eine einer äußeren, insbesondere seitlichen Umgebung des Fahrzeugs zugewandte Richtung bezieht.

Das zweite Verkleidungselement 9 schließt bündig mit einem dritten, relativ zu dem ersten Verkleidungselement 7 und dem zweiten Verkleidungselement 9 feststehenden Verkleidungselement 11 im Bereich der zweiten Schwenkachse S2 ab. Insbesondere geht das zweite Verkleidungselement 9 bevorzugt im Bereich der zweiten Schwenkachse S2 in das dritte Verkleidungselement 11 über. Dabei ist es möglich, dass die zweite Schwenkachse S2 durch eine Schwächung oder Ausdünnung im Übergangsbereich zwischen dem zweiten Verkleidungselement 9 und dem dritten Verkleidungselement 11 gebildet ist, wobei besonders bevorzugt ein Filmscharnier vorgesehen sein kann. Dabei ist es insbesondere möglich, dass das zweite Verkleidungselement 9 mit dem dritten Verkleidungselement 11 materialeinheitlich und/oder einstückig ausgebildet ist.

Das erste Verkleidungselement 7 und das zweite Verkleidungselement 9 sind in der ersten Funktionsstellung bündig mit einem - in Längsrichtung gesehen - dem ersten Verkleidungselement 7 und dem zweiten Verkleidungselement 9 benachbarten, feststehenden Bereich 13 der Längsträger-Verkleidungsanordnung 1 angeordnet. Insbesondere ist vorgesehen, dass das erste Verkleidungselement 7 an einem vierten, relativ zu dem ersten Verkleidungselement 7 und zu dem zweiten Verkleidungselement 9 feststehenden Verkleidungselement 15 schwenkbar angelenkt ist. Für die schwenkbare Anlenkung des ersten Verkleidungselements 7 an dem vierten Verkleidungselement 15 kann insbesondere ein Schwenkzapfen zur Anwendung kommen. Auch andere gelenkige Verbindungen sind aber durchaus möglich, beispielsweise ein Filmscharnier oder dergleichen.

Es ist möglich, dass das dritte Verkleidungselement 11 mit dem vierten Verkleidungselement 15 einstückig und/oder materialeinheitlich ausgebildet ist.

Anhand von Figur 1 zeigt sich auch, dass die Längsträger-Verkleidungsanordnung 1 insgesamt bevorzugt als - im Querschnitt gesehen - C-förmiges Hohlprofil ausgebildet ist.

An dem ersten Verkleidungselement 7 ist ein in Figur 2 dargestellter Mitnehmer 17 angeordnet, der vorzugsweise als stabförmiger Vorsprung, als Nippel, als lippenartiger Fortsatz, oder in anderer geeigneter Weise ausgebildet ist. Der Mitnehmer 17 greift bevorzugt in eine zu ihm korrespondierende Führung 19 ein, die an dem zweiten Verkleidungselement 9 angeordnet ist, wobei die Führung 19 hier als Langloch 21 ausgebildet ist. Durch den Eingriff des Mitnehmers 17 in die Führung 19 ist eine Kopplung zwischen den Verkleidungselementen 7, 9 verwirklicht, wobei das zweite Verkleidungselement 9 bei einer Verlagerung des ersten Verkleidungselements 7 von diesem mitnehmbar ist. Das Langloch 21 ist hier in einer Führungsleiste 23 ausgebildet, die an dem zweiten Verkleidungselement 9 angeordnet ist.

Der Mitnehmer 17 ist in der ersten Funktionsstellung von einer nach innen umgebogenen Biegekante 25 des zweiten Verkleidungselements 9 abgedeckt, wobei sich die Biegekante 25 an einem oberen Ende des zweiten Verkleidungselements 9 befindet. Dabei liegt die Biegekante 25 in der ersten Funktionsstellung bevorzugt dichtend auf dem ersten Verkleidungselement 7 auf, sodass ein Inneres 27 der Längsträger-Verkleidungsanordnung 1 gedichtet und vor eindringender Feuchtigkeit oder Schmutz geschützt ist.

Die Führung 19 ist bevorzugt so ausgebildet und angeordnet, dass bei einer Verlagerung der Verkleidungselemente 7, 9 von der ersten Funktionsstellung in die zweite Funktionsstellung zunächst nur das erste Verkleidungselement 7 bewegt wird, wobei das zweite Verkleidungselement 9 zunächst stillsteht, wobei dieses erst nach Durchlaufen eines definierten Schwenkwegs durch das erste Verkleidungselement 7 von diesem mitbewegt wird.

Das erste Verkleidungselement 7 ist in der ersten Funktionsstellung - in bestimmungsgemäßer Einbaulage - horizontal ausgerichtet und bildet eine Abschlusswandung für die Längsträger-Verkleidungsanordnung 1 nach oben. Das zweite Verkleidungselement 9 ist in der ersten Funktionsstellung im Wesentlichen vertikal ausgerichtet, wobei es eine seitliche Abschlusswandung der Längsträger-Verkleidungsanordnung 1 bildet.

Die Verkleidungselemente 7, 9 sind bei dem hier dargestellten Ausführungsbeispiel in beiden Funktionsstellungen, das heißt in der ersten Funktionsstellung und in der zweiten Funktionsstellung, durch die Verstelleinrichtung 5 arretiert. Es sind demnach beide Funktionsstellungen als Sperrstellungen ausgebildet.

Die Verstelleinrichtung 5 weist eine Exzenterscheibe 29 auf, die bevorzugt von einem hier nicht dargestellten Aktor oder Motor, insbesondere einem Elektromotor, antreibbar ist.

Dabei ist der Aktor oder Motor bevorzugt über ein selbsthemmendes Getriebe mit der Exzenterscheibe 29 gekoppelt, wobei das selbsthemmende Getriebe insbesondere zusätzlich zur Arretierung in den beiden Sperrstellungen beiträgt. An der Exzenterscheibe 29 ist außermittig, also exzentrisch, ein Lenkerhebel 31 mit einem ersten Ende schwenkbeweglich in einem ersten Anlenkpunkt 33 angelenkt, wobei der Lenkerhebel 31 mit einem - in Längsrichtung des Lenkerhebels 31 gesehen - dem ersten Ende gegenüberliegenden, zweiten Ende schwenkbeweglich an dem ersten Verkleidungselement 7 in einem zweiten Anlenkpunkt 35 angelenkt ist. Dabei greift der Lenkerhebel 31 insbesondere mit dem zweiten Ende an einem unterseitigen Vorsprung 37 des ersten Verkleidungselements 7 an.

In den beiden Funktionsstellungen sind die Anlenkpunkt 33, 35 und ein Mittelpunkt der Exzenterscheibe 29, durch welchen eine Drehachse D der Exzenterscheibe 19 verläuft, jeweils nicht kollinear zueinander angeordnet; vielmehr ist der erste Anlenkpunkt 33 über diese kollineare Totpunktlage hinaus etwas weiter in Richtung der jeweiligen Funktionsstellung versetzt angeordnet, sodass eine Übertotpunktlage realisiert wird, wodurch die Verstellanordnung 3 in der jeweiligen Funktionsstellung arretiert wird. Um die Verstellanordnung 3 nämlich aus der jeweiligen Funktionsstellung in die jeweils andere Funktionsstellung zu verlagern, bedarf es dann einer Überwindung der kollinearen Totpunktlage, was eine Kraft erfordert, die nur durch aktive Ansteuerung der Verstelleinrichtung 5 aufgebracht werden kann. Von außen an den Verstellelementen 7, 9 angreifende Kräfte führen dagegen zu einem Drehmoment an der Exzenterscheibe 29, welches den ersten Anlenkpunkt 33 weiter in Richtung der Übertotpunktlage, das heißt von der kollinearen Totpunktlage wegdrängt, also entgegen der Richtung der jeweils anderen Funktionsstellung. Diese Kräfte werden aber durch ein Anschlagelement an einem jeweiligen Anschlag abgestützt.

In Figur 1 schlägt ein erstes Anschlagelement 39 an einem ersten Anschlag 41 an, wodurch eine weitere Verdrehung der Exzenterscheibe 29 über die erste Funktionsstellung hinaus verhindert wird. Ein zweites Anschlagelement 43 ist eingerichtet, um in entsprechender Weise in der zweiten Funktionsstellung an einem zweiten Anschlag 45 anzuschlagen und dort entsprechend eine weitere Verdrehung der Exzenterscheibe 29 über die zweite Funktionsstellung hinaus zu verhindern. Die Anschlagelemente 39, 43 sind an der Exzenterscheibe 29 ausgebildet und dort insbesondere als radiale Vorsprünge oder radiale Stufen an einem äußeren Umfang 47 der Exzenterscheibe 29 ausgebildet.

An dem dritten Verkleidungselement 11 ist ein erster, domartiger Ständer 49 angeordnet, der einen Stützanschlag 51 aufweist, an dem in der zweiten Funktionsstellung das erste Verkleidungselement 7 anschlägt. Der erste Anschlag 41 und der zweite Anschlag 45 sind an einem zweiten domartigen Ständer 53 angeordnet, der ebenfalls - wie der erste Ständer 49 - an dem dritten Verkleidungselement 11 angeordnet ist. Dabei ist dieser zweite Ständer 53 kleiner und insbesondere in Hochrichtung gesehen niedriger ausgebildet als der erste Ständer 49.

Figur 2 zeigt eine andere - insbesondere relativ zu der Ansicht gemäß Figur 1 gedrehte - Ansicht des Ausführungsbeispiels der Längsträger-Verkleidungsanordnung 1 gemäß Figur 1. Gleiche und funktionsgleiche Elemente sind mit gleichen Bezugszeichen versehen, sodass insofern auf die vorangegangene Beschreibung verwiesen wird. In Figur 2 ist insbesondere erkennbar, wie der Mitnehmer 17 in die Führung 19 eingreift.

Figur 3 zeigt eine weitere Ansicht des Ausführungsbeispiels der Längsträger-Verkleidungsanordnung 1 gemäß den Figuren 1 und 2. Gleiche und funktionsgleiche Elemente sind mit gleichen Bezugszeichen versehen, sodass insofern auf die vorangegangene Beschreibung verwiesen wird. Dabei wird anhand von Figur 3 insbesondere deutlich, dass das erste Verkleidungselement 7 und das zweite Verkleidungselement 9 in der ersten Funktionsstellung bündig mit einem diesen Verkleidungselementen 7, 9 benachbarten, feststehenden Bereich der Längsträger-Verkleidungsanordnung 1, nämlich insbesondere mit dem dritten Verkleidungselement 11 und dem vierten Verkleidungselement 15, angeordnet sind, sodass sich eine geschlossene Kontur für die Längsträger-Verkleidungsanordnung 1 in der ersten Funktionsstellung ergibt.

Figur 4 zeigt eine weitere Darstellung des Ausführungsbeispiels der Längsträger-Verkleidungsanordnung 1 gemäß den Figuren 1 bis 3, nun allerdings in der zweiten Funktionsstellung. Gleiche und funktionsgleiche Elemente sind mit gleichen Bezugszeichen versehen, sodass insofern auf die vorangegangene Beschreibung verwiesen wird. Dabei ist in Figur 4 erkennbar, dass das erste Verkleidungselement 7 und das zweite Verkleidungselement 9 in der zweiten Funktionsstellung aufeinandergeklappt, insbesondere übereinandergeklappt sind.

Das erste Verkleidungselement 7 liegt dabei mit einer Innenfläche 55 an dem Stützanschlag 51 an.

Das zweite Verkleidungselement 9 liegt mit seiner nach innen gerichteten Biegekante 25 auf dem ersten Verkleidungselement 7 auf. Vorzugsweise weist es an der Biegekante 25 ein - insbesondere elastisches - Dämpfungselement auf, das in der zweiten Funktionsstellung mit dem ersten Verkleidungselement 7 in berührendem Kontakt ist. Auf diese Weise kann das erste Verkleidungselement 7 vor Beschädigungen durch das zweite Verkleidungselement 9 geschützt werden.

Anhand von Figur 4 zeigt sich auch, dass die Exzenterscheibe 29 in der zweiten Funktionsstellung mit dem zweiten Anschlagelement 43 an dem zweiten Anschlag 45 anschlägt, wodurch die zweite Funktionsstellung definiert und - insbesondere in Kombination mit der bereits beschriebenen Übertotpunktlage - arretiert ist.

Insgesamt zeigt sich, dass mit der hier vorgeschlagenen Längsträger-Verkleidungsanordnung 1 ein - mit Blick auf die Schwenkbewegung - besonders bauraumsparendes Konzept einer dynamischen Längsträgerverkleidung bereitgestellt werden kann, welches gleichwohl in der Lage ist, einen großen Bauraum für Beine eines Nutzers eines Kraftfahrzeugs zur Erhöhung von dessen Komfort beim Ein- und Aussteigen freizugeben.

## Patentansprüche

1. Längsträger-Verkleidungsanordnung (1) für ein Fahrzeug, mit einer ein erstes Verkleidungselement (7) und ein zweites Verkleidungselement (9) aufweisenden Verstellanordnung (3), die in eine erste Funktionsstellung und in eine zweite Funktionsstellung verlagerbar ist, und mit einer Verstelleinrichtung (5), die eingerichtet ist, um die Verstellanordnung (3) von der ersten Funktionsstellung in die zweite Funktionsstellung und/oder von der zweiten Funktionsstellung in die erste Funktionsstellung zu verstellen, wobei das erste Verkleidungselement (7) und das zweite Verkleidungselement (9) miteinander gekoppelt sind, sodass das erste Verkleidungselement (7) und das zweite Verkleidungselement (9) gemeinsam durch die Verstelleinrichtung (5) verlagerbar sind,
**dadurch gekennzeichnet, dass**
das zweite Verkleidungselement (9) in der zweiten Funktionsstellung auf dem ersten Verkleidungselement (7) aufliegt, wobei das zweite Verkleidungselement (9) ein Dämpfungselement aufweist, das in der zweiten Funktionsstellung mit dem ersten Verkleidungselement (7) in berührendem Kontakt ist.

2. Längsträger-Verkleidungsanordnung (1) nach Anspruch 1,
**dadurch gekennzeichnet, dass**
das erste Verkleidungselement (7) um eine erste Schwenkachse (S1) schwenkbar gelagert ist, wobei das zweite Verkleidungselement (9) um eine zweite Schwenkachse (S2) schwenkbar gelagert ist und wobei die zweite Schwenkachse (S2) zu der ersten Schwenkachse (S1) parallelversetzt angeordnet ist.

3. Längsträger-Verkleidungsanordnung (1) nach einem der vorhergehenden Ansprüche,
**dadurch gekennzeichnet, dass**
das zweite Verkleidungselement (9) bündig mit einem dritten, relativ zu dem ersten Verkleidungselement (7) und dem zweiten Verkleidungselement (9) feststehenden Verkleidungselement (11) im Bereich der zweiten Schwenkachse (S2) abschließt.

4. Längsträger-Verkleidungsanordnung (1) nach einem der vorhergehenden Ansprüche,
**dadurch gekennzeichnet, dass**
das erste Verkleidungselement (7) und das zweite Verkleidungselement (9) in der zweiten Funktionsstellung aufeinandergeklappt oder übereinandergeklappt sind.

5. Längsträger-Verkleidungsanordnung (1) nach einem der vorhergehenden Ansprüche,
**dadurch gekennzeichnet, dass**
das erste Verkleidungselement (7) in der zweiten Funktionsstellung mit einer Innenfläche (55) an einem Stützanschlag (51) anliegt, der an einem unteren, dem ersten Verkleidungselement (7) in Hochrichtung gesehen gegenüberliegenden Verkleidungselement (11) angeordnet ist.

6. Längsträger-Verkleidungsanordnung (1) nach Anspruch 1,
**dadurch gekennzeichnet, dass**
das Dämpfungselement an einer Biegekante (25) des zweiten Verkleidungselements (9) vorgesehen ist, mit der das zweite Verkleidungselement (9) in der ersten Funktionsstellung auf dem ersten Verkleidungselement (7) aufliegt.

7. Längsträger-Verkleidungsanordnung (1) nach einem der vorhergehenden Ansprüche,
**dadurch gekennzeichnet, dass**
das erste Verkleidungselement (7) an einem vierten, relativ zu dem ersten Verkleidungselement (7) und dem zweiten Verkleidungselement (9) feststehenden Verkleidungselement (15) schwenkbar angelenkt ist.

8. Längsträger-Verkleidungsanordnung (1) nach einem der vorhergehenden Ansprüche,
**dadurch gekennzeichnet, dass**
das erste Verkleidungselement (7) und das zweite Verkleidungselement (9) in der ersten Funktionsstellung bündig mit einem - in Längsrichtung gesehen - dem ersten Verkleidungselement (7) und dem zweiten Verkleidungselement (9) benachbarten, feststehenden Bereich (13) der Verkleidungsanordnung (1) angeordnet sind.

9. Kraftfahrzeug mit einer seitlichen Türausschnittsöffnung, die unten durch einen Seitenschweller begrenzt ist, der eine tragende Struktur und eine äußere Längsträger-Verkleidungsanordnung (1) nach einem der Ansprüche 1 bis 8 aufweist.

## Claims

1. Side member covering assembly (1) for a vehicle, with an adjusting assembly (3) having a first covering element (7) and a second covering element (9) and movable into a first functional position and a second functional position, and with an adjusting device (5) designed to move the adjusting assembly (3) from the first functional position to the second functional position and/or from the second functional position to the first functional position, wherein the first covering element (7) and the second covering element (9) are coupled to each other, so that the first covering element (7) and the second covering element (9) can be moved jointly by the adjusting device (5),
**characterised in that**
the second covering element (9) lies on the first covering element (7) in the second functional position, the second covering element (9) having a damping element which is in touch contact with the first covering element (7) in the second functional position.

2. Side member covering assembly (1) according to claim 1,
**characterised in that**
the first covering element (7) is pivotably mounted about a first pivoting axis (S1), the second covering element (9) being pivotably mounted about a second pivoting axis (S2) and the second pivoting axis (S2) being arranged with parallel offset relative to the first pivoting axis (S1).

3. Side member covering assembly (1) according to any of the preceding claims,
**characterised in that**
the second covering element (9) is in the region of the second pivoting axis (S2) flush with a third covering element (11), which is stationary relative to the first covering element (7) and the second covering element (9).

4. Side member covering assembly (1) according to any of the preceding claims,
**characterised in that**
the first covering element (7) and the second covering element (9) are folded on top or above each other in the second functional position.

5. Side member covering assembly (1) according to any of the preceding claims,
**characterised in that**
the first covering element (7) bears in the second functional position with an inner surface (55) against a supporting stop (51) located at a lower covering element (11) situated opposite the first covering element (7) as viewed in the vertical direction.

6. Side member covering assembly (1) according claim 1,
**characterised in that** the damping element is provided at a bending edge (25) of the second covering element (9) with which the second covering element (9) lies on the first covering element (7) in the first functional position.

7. Side member covering assembly (1) according to any of the preceding claims,
**characterised in that**
the first covering element (7) is hinged to a fourth covering element (15), which is stationary relative to the first covering element (7) and the second covering element (9).

8. Side member covering assembly (1) according to any of the preceding claims,
**characterised in that**
the first covering element (7) and the second covering element (9) are in the first functional position arranged to be flush with a stationary region (13) of the covering assembly (1), which region is - as viewed in the longitudinal direction - adjacent to the first covering element (7) and the second covering element (9).

9. Motor vehicle with a lateral door cutout opening bounded at the bottom by a side sill having a load-bearing structure and an outer side member covering assembly (1) according to any of claims 1 to 8.

## Revendications

1. Système d'habillage de longeron (1) pour un véhicule à moteur, comprenant un système de déplacement (3) comprenant un premier élément d'habillage (7) et un deuxième élément d'habillage (9), ledit système de déplacement (3) pouvant se déplacer dans une première position de fonctionnement et dans une seconde position de fonctionnement, et comprenant un dispositif de déplacement (5), qui est conçu pour déplacer le système de déplacement de la première position de fonctionnement à la seconde position de fonctionnement et/ou de la seconde position de fonctionnement à la première position de fonctionnement, le premier élément d'habillage (7) et le deuxième élément d'habillage (9) étant reliés l'un à l'autre, de sorte que le premier élément d'habillage (7) et le deuxième élément d'habillage (9) puissent être déplacés ensemble par le dispositif de déplacement (5), **caractérisé en ce que** le deuxième élément d'habillage (9) repose dans la seconde position de fonctionnement sur le premier élément d'habillage (7), le deuxième élément d'habillage (9) comportant un élément d'amortissement, qui entre en contact avec le premier élément d'habillage (7) dans la seconde position de fonctionnement.

2. Système d'habillage de longeron (1) selon la revendication 1, **caractérisé en ce que** le premier élément d'habillage (7) est monté pivotant autour d'un premier axe de pivotement (S1), le deuxième élément d'habillage (9) étant monté pivotant autour d'un second axe de pivotement (S2) et le second axe de pivotement (S2) étant décalé parallèlement au premier axe de pivotement (S1).

3. Système d'habillage de longeron (1) selon l'une quelconque des revendications précédentes, **caractérisé en ce que** le deuxième élément d'habillage (9) se termine par un troisième élément d'habillage fixe par rapport au premier élément d'habillage (7) et au deuxième élément d'habillage (9) dans la zone du second axe de pivotement (S2).

4. Système d'habillage de longeron (1) selon l'une quelconque des revendications précédentes, **caractérisé en ce que** le premier élément d'habillage (7) et le deuxième élément d'habillage (9) sont repliés ou rabattus l'un sur l'autre dans la seconde position de fonctionnement.

5. Système d'habillage de longeron (1) selon l'une quelconque des revendications précédentes, **caractérisé en ce que** le premier élément d'habillage (7) dans la seconde position de fonctionnement repose par une surface intérieure (55) sur une butée d'appui (51), qui est disposée sur un élément d'habillage inférieur (11) en regard du premier élément d'habillage lorsqu'on l'observe à la verticale.

6. Système d'habillage de longeron (1) selon la revendication 1, **caractérisé en ce que** l'élément d'amortissement se situe sur une ligne de pliage (25) du deuxième élément d'habillage (9) avec laquelle le deuxième élément d'habillage (9) repose dans la première position de fonctionnement sur le premier élément d'habillage (7).

7. Système d'habillage de longeron (1) selon l'une quelconque des revendications précédentes, **caractérisé en ce que** le premier élément d'habillage (7) est articulé pivotant sur un quatrième élément d'habillage (15) fixe par rapport au premier élément d'habillage (7) et au deuxième élément d'habillage (9).

8. Système d'habillage de longeron (1) selon l'une quelconque des revendications précédentes, **caractérisé en ce que** le premier élément d'habillage (7) et le deuxième élément d'habillage (9) étant disposés dans la première position de fonctionnement dans le prolongement d'une zone fixe (13) du système d'habillage (1) avoisinant le premier élément d'habillage (7) et le deuxième élément d'habillage (9) lorsqu'ils sont observés dans le sens de la longueur.

9. Véhicule à moteur comprenant une ouverture latérale de découpe pour portière qui est limitée en dessous par un bas de caisse latéral qui présente une structure porteuse et un système d'habillage de longeron (1) extérieur selon l'une des revendications 1 à 8.
